# EUROPEAN PATENT SPECIFICATION

(11) **EP 2 123 990 B1**
(45) Date of publication and mention of the grant of the patent: **16.10.2019**
(21) Application number: 08710304.0
(22) Date of filing: 05.02.2008
(51) Int. Cl.: F24F 13/20, F24F 13/28

(54) **INDOOR UNIT FOR AIR CONDITIONER**
INNENEINHEIT FÜR EINE KLIMAANLAGE
UNITÉ INTÉRIEURE POUR CLIMATISEUR

(30) Priority: 09.02.2007 JP 2007030714
(43) Date of publication of application: 25.11.2009
(73) Proprietor: Daikin Industries, Ltd., Osaka-shi, Osaka 530-8323 (JP)
(72) Inventor: OKADA, Morimichi, Sakai-shi Osaka 591-8511 (JP); NOUCHI, Yoshiteru, Sakai-shi Osaka 591-8511 (JP); MORIZANE, Tetsuya, Sakai-shi Osaka 591-8511 (JP)
(74) Representative: Hoffmann Eitle
(86) International application number: PCT/JP2008/000150
(87) International publication number: WO 2008/096536

(56) References cited:
- EP-A2- 1 741 992
- JP-A- H1 085 534
- JP-A- S6 423 036
- JP-A- 11 118 183
- JP-A- 2005 083 721
- JP-A- 2006 071 121
- JP-U- 63 104 913

## Description

### TECHNICAL FIELD

The present invention relates to an indoor unit of an air conditioner installed on a ceiling of room space.

### BACKGROUND ART

Among indoor units of air conditioners for performing air conditioning in space, one example installed on a ceiling of the space has conventionally been known. For example, as disclosed by Patent Document 1, an indoor unit of this type includes an indoor fan accommodated in a casing installed on the ceiling. On an inlet side of the indoor fan, a filter for trapping dust, a suction grille arranged on a room-facing side of the filter, etc. are provided.

The indoor unit disclosed by Patent Document 1 further includes a rotating brush for removing dust trapped on the filter in the shape of a disc. The rotating brush is configured to remove the dust adhered to the filter by bringing bristles of the rotating brush in contact with the filter rotating on the same plane. The removed dust is held in a collecting case in which the rotating brush is accommodated.

Instead of using the rotating brush, the dust trapped on the filter may be removed, for example, by sucking the dust trapped on the filter using a pipe having a dust inlet, as disclosed by Patent Document 2.

Further, EP 1 741 992 A2 discloses an indoor unit and air conditioner which are capable of reducing the work load required for carrying out maintenance on an airfilter are provided. The indoor unit includes a chassis installed on a ceiling, an air inlet section configured to allow indoor airtoflow into the chassis, an airfilter configured to collect dust in the airflowing from the air inlet section, a dust-removing unit configured to remove dust attached to the airfilter, a collecting unit configured to collect the dust removed by the dust-re-moving unit, and a raising unit configured to raise and lower the collecting unit to and from the chassis.
[Patent Document 1] Published Japanese Patent Application No.2006-71121
[Patent Document 2] Published Japanese Patent Application No. 2005-83721

### DISCLOSURE OF THE INVENTION

### PROBLEM THAT THE INVENTION IS TO SOLVE

As described above, when the collecting case for collecting the dust removed from the filter is provided separately, space for the collecting case is required in the indoor unit installed on the ceiling. This brings about a problem of increase of the size of the indoor unit.

In view of this problem, the present invention was developed. The present invention is directed to the indoor unit of the air conditioner installed on the ceiling, and aims to reduce the size of the indoor unit, while saving space for holding the dust removed from the filter.

### MEANS OF SOLVING THE PROBLEM

The above-mentioned technical problem is solved by the combination of features of claim 1. Dependent claims relate to preferred embodiments.

In the case of the indoor unit in accordance with the present invention, the container portion (17a) provided on the cover portion (17e) covering the room-facing side of the air filter (21) can hold the dust removed from the air filter (21). This eliminates the need to provide a separate dust case for holding the dust as employed in the conventional indoor unit, and therefore, the size of the indoor unit (10) can be reduced.

The container portion (17a, 101a) may be integrated with the cover portion (17e), or may be detachable from the cover portion (101b). The integration of the container portion (17a) and the cover portion (17e) eliminates the need to provide the container portion (17a) separately, thereby reducing a parts count. Further, with the container portion (101a) configured to be detachable from the cover portion (101b), the container portion (101a) can be detached to collect the dust in the container 5 portion (101a), thereby improving workability in collecting the dust.

According to some preferred embodiments, an opening (17b) is formed in a top surface of the container portion (17a), and that the dust removing means (61) is configured so that the dust is held in the container portion (17a) through the opening (17b). By allowing the dust to enter the container portion 10(17a) through the opening (17b) formed in the top surface of the box-shaped container portion (17a), the dust held in the container portion (17a) is prevented from dispersing.

In the box-shaped container portion (17a), the dust removing means (61) is preferably arranged in the opening (17b). With the dust removing means (61) arranged in the opening (17b) of the container portion (17a), the dust 15 removed by the dust removing means (61) from the air filter (21) can efficiently be held in the container portion (17a) without dispersing the dust into the surroundings. In addition, with the dust removing means (61) arranged in the opening (17b), the dust removing means (61) functions as a lid, thereby preventing the dispersion of the dust once held in the container portion (17a) to the outside through the opening (17b).

The opening (17b) of the container portion (17a) is preferably located in a center part of the cover portion (17e) when viewed in plan. The cover portion (17e) is arranged to cover the room-facing side of the air filter (21) arranged on the inlet side of the indoor fan (13). Therefore, air will be sucked by the indoor fan (13) through a gap around the cover portion (17e). In this case, on the rear side of the 25 cover portion (17e), the air flows in an obliquely upward direction from the periphery of the cover portion (17e) to the inlet of the indoor fan (13). When the opening (17b) of the container portion (17a) is formed in a peripheral part of the cover, the flow of air may
cause the dispersion of the dust into the surroundings. In contrast, the flow of air near the center part of the rear side of the cover portion (17e) is small, and is less likely to affect the dust. Therefore, the provision of the opening (17b) in the center part of the container portion (17a) allows for the prevention of the dispersion of the dust.

The top surface of the container portion (17a) preferably has an upward inclination from sides to the center part of the cover portion (17e). This allows the top .surface of the container portion (17a) to function as a guide for the above-described flow of air. Further, this makes it possible to increase a volume of the container portion (17a) as much as possible, and therefore, a larger amount of the dust can be held in the container portion (17a).

The container portion (17a) is preferably provided with a removal port portion (17c) through which the dust held in the container portion (17a) is removed. With the provision of the removal port portion (17c), the dust can easily be removed from the container portion (17a).

The indoor unit further includes a lifting/lowering means (70) configured to lift/lower the cover portion (17e). Since the cover portion (17e) can be lifted/lowered relative to the indoor unit (10) installed on the ceiling by the lifting/lowering means (70), the dust held in xhe container portion (17a) can be collected without the need for the worker to step on a ladder or the like to work at high 20 elevations. This can improve the workability in collecting the dust held in the indoor unit (10).

The lifting/lowering means (70) is preferably configured to lift/lower the cover portion (17e) in a substantially horizontal state. In lifting/lowering the cover portion (17e), the dust held in the container portion (17a) is 25 lifted/lowered together with the cover portion (17e) without greatly moving in the container portion (17a). This can prevent the dispersion of the dust in lifting/lowering the cover portion (17e) as much as possible.

It is preferable that the container portion (17a) is provided with a removal port portion (81) through which the dust held in the container portion (17a) is removed, and an openable removal port cover (82) for covering the removal port portion (81), and that the lifting/lowering means (70) is configured to lift/lower the cover portion (17e) in an 5 inclined state so that the dust is gathered to the removal port portion (81).

In this manner, the dust held in the container portion (17a) is gathered to the neighborhood of the removal port portion (81) in lifting/lowering the cover portion (17e), and the dust can easily be collected through the removal port portion (81).

### EFFECT OF THE INVENTION

As described above, in the indoor unit (10) of the air conditioner according to the present invention, the container portion (17a) is provided on the cover portion (17e) covering the room-facing side of the air filter (21) so that it can hold the dust removed by the dust removing means (61) from the air filter (21) arranged on the inlet side of the 15 indoor fan (13). This structure allows for the reduction in size of the entire unit as compared with a unit in which a container for holding the dust is provided separately.

For those embodiments in the case of which the container portion (17a) is integrated with the cover portion (17e), both a parts count and cost are reduced. For those embodiments in the case of which the container portion (17a) is 20 detachable from the cover portion (17e), the workability in collecting the dust from the container portion (17a) is improved.

The container portion (17a) is in the shape of a box. For those embodiments in the case of which the dust removed from the air filter (21) by the dust removing means (61) is held in the container portion (17a) through the opening (17b) formed in the top 25 surface of the container portion (17a), the structure can prevent the dispersion of the dust held in the container portion (17a).

According to some preferred embodiments, the dust removing means (61) is arranged in the opening (17b). This structure makes it possible to reliably introduce the dust removed by the dust removing means (61) into the container portion (17a), and to prevent the dispersion of the dust with more reliability.

According to some preferred embodiments, the opening (17b) of the container 5 portion (17a) is located in a center part of the cover portion (17e) when viewed in plan. This structure makes it possible to prevent the dispersion of the dust caused by a flow of air on the rear side of the cover portion (17e).

According to some preferred embodiments, the top surface of the container portion (17a) has an upward inclination from sides to the center part of the cover portion (17e). This allows for the top surface of the container portion (17a) to function as a guide for the air flow, thereby reducing ventilation resistance. Thus, the volume of the container portion (17a) is increased so that the container portion (17a) can hold a larger amount of the dust.

According to some preferred embodiments, the container portion (17a) is 15 provided with a removal port portion (17c) through which the dust is removed. This structure allows for the easy collection of the dust through the removal port portion (17c).

According to some preferred embodiments, the indoor unit further includes the lifting/lowering means (70) configured to lift/lower the cover portion (17e). Therefore, the worker does not need to work at high elevations, and the dust held in the container 20 portion (17a) can easily be collected. This improves the workability in collecting the dust.

According to some preferred embodiments, the lifting/lowering means (70) is configured to lift/lower the cover portion (17e) in a substantially horizontal state. This structure can prevent the dispersion of the held dust to the outside in lifting/lowering the 25 cover portion (17e).

According to some preferred embodiments, the container portion (17a) is provided with a removal port portion (81) through which the dust is removed, and a removal port cover (82) for covering the removal port portion (81), and the lifting/lowering means (70) is configured to lift/lower the cover portion (17e) in an inclined state with the removal port portion (81) located at the lowest position. Therefore, in lifting/lowering the cover portion (17e), the dust in the container portion (17a) is gathered to the removal port portion (81) so that it can easily be collected through the removal port portion (81). This can improve the workability in collecting the dust.

### BRIEF DESCRIPTION OF THE DRAWINGS

FIG. 1 is a front view illustrating an indoor unit according to an embodiment of the present invention.
FIG. 2 is a cross-sectional view illustrating the indoor unit.
FIG. 3 is a perspective view illustrating the indoor unit with a center cover lowered.
FIG. 4 is a diagram illustrating the schematic structure of the filter and the neighborhood.
FIG. 5 is a perspective view illustrating the schematic structure of the filter and the neighborhood.
FIG. 6 is a perspective view illustrating a filter.
FIG. 7 is a view illustrating a removal port cover of the center cover opened to collect dust.
FIG. 8 is a view corresponding to FIG. 7 illustrating a peripheral side of the removal port cover pivoted upward.
FIG. 9 is a view corresponding to FIG. 7 illustrating a center cover according to modified example 1 hung at one side.
FIG. 10 is a view corresponding to FIG. 4 illustrating a cross-section of a center cover according to modified example 2.
FIG. 11 is a perspective view illustrating a belt member according to the other embodiment.
FIG. 12 is a view corresponding to FIG. 4 illustrating another example of a filter transfer mechanism.

### DESCRIPTION OF CHARACTERS

- 10: Indoor unit
- 11: Casing
- 12: Indoor panel
- 13: Indoor fan
- 17, 101: Center cover
- 17a, 101a: Container portion
- 17b: Opening
- 17c: Removal port (removal port portion)
- 17d: Removal port cover
- 17e, 101b: Cover portion
- 21: Filter
- 50: Filter transfer mechanism
- 51: Transfer belt
- 52: Drive roller
- 53: Driven roller
- 60: Dust removing mechanism
- 61: Rotating brush (dust removing means)
- 62: Cylindrical member
- 63: Bristle
- 70: Dust collecting mechanism (lifting/lowering means)
- 71: Wire
- 72: Lifting/lowering motor
- 81: Removal port (removal port portion)
- 82: Removal port cover
- 90: Belt member

### BEST MODE FOR CARRYING OUT THE INVENTION

Hereinafter, an embodiment of the present invention will be described in detail with reference to the drawings. The description of the following preferable embodiment is provided only for explanation purpose, and does not limit the present invention, an object to which the invention is applied, and use of the invention.

### -General Structure-

An indoor unit (10) of an air conditioner according to the present embodiment constitutes an air conditioner together with an outdoor unit which is not shown. Specifically, the indoor unit (10) is connected to the outdoor unit through a refrigerant pipe, and constitutes a refrigerant circuit together with the outdoor unit. The air conditioner is configured to be able to alternatively perform cooling operation and heating operation.

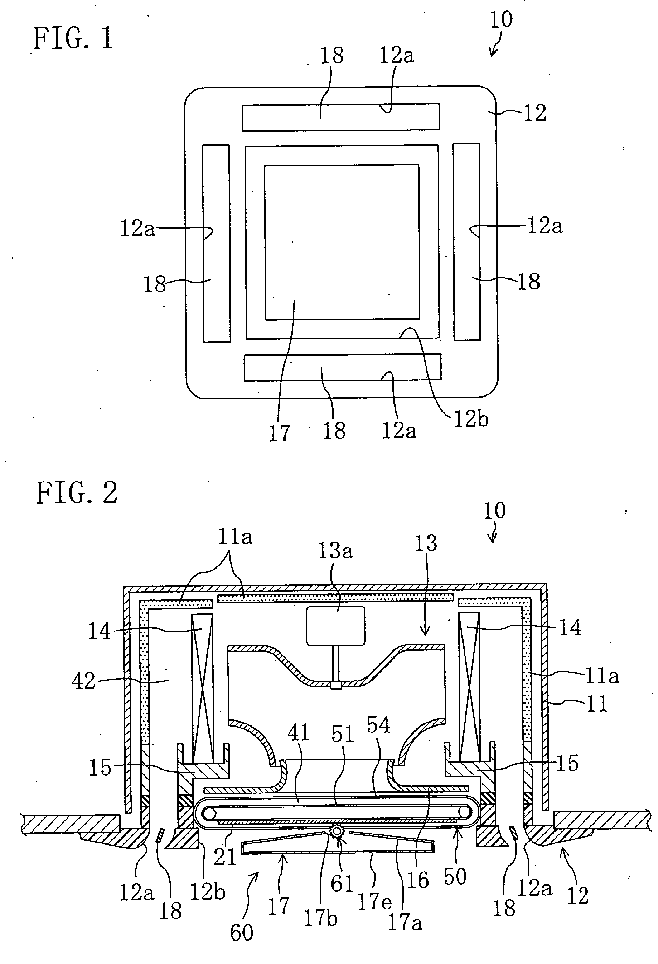

The indoor unit (10) of the present embodiment is a unit installed on a ceiling. As shown in FIGS. 1 and 2, the indoor unit includes a box-shaped casing (11), and an indoor panel (12) attached to a bottom end portion of the casing (11). The indoor panel (12) is provided with outlets (12a, 12a, 12a, 12a) for blowing air in every direction.

The casing (11) is a rectangular box-shaped member placed at a level higher than a ceiling surface, with its opening facing downward. The casing (11) accommodates therein an indoor fan (13), an indoor heat exchanger (14), a drain pan (15), and a bell mouth (16). A heat insulator (11a) is arranged inside the casing (11) to surround the above-mentioned components.

The indoor fan (13) is configured as a so-called turbo fan. The indoor fan (13) is arranged near the center of the casing body (11) with its inlet facing downward. Specifically, the indoor fan (13) is arranged in the casing (11) with the inlet facing downward, and an outlet facing the lateral directions. The bell mouth (16) is arranged on the inlet side of the indoor fan (13) so that the air sucked from below through the bell mouth (16) is blown in the lateral directions. In FIG. 2, character 13a indicates a fan motor of the indoor fan.

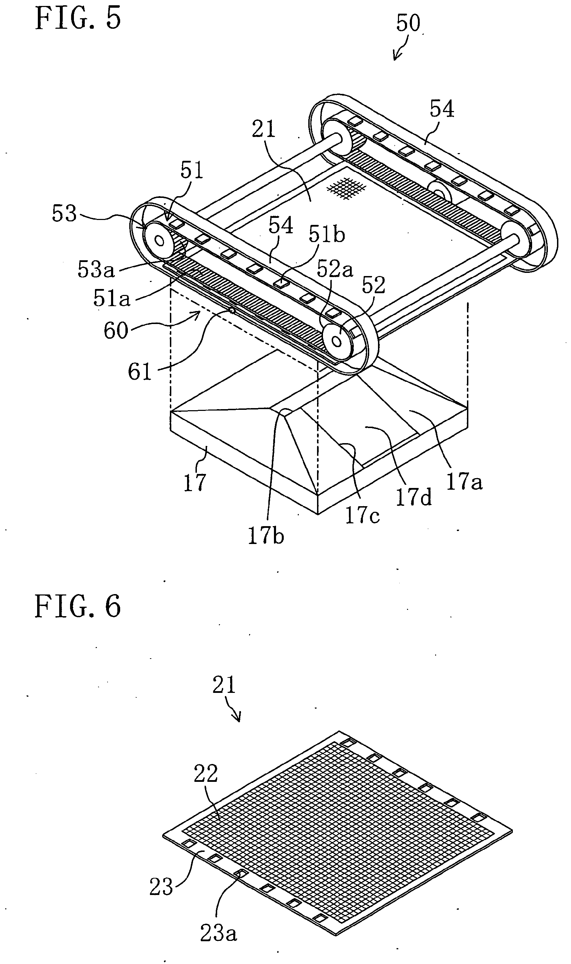

A filter (21) (an air filter) for trapping dust, and a center cover (17) (a cover member), which is part of the indoor panel (12) and covers a room-facing side of the filter (21) as described later, are arranged below the bell mouth (16). As shown in FIG. 6, the filter (21) is in the shape of a sheet, and is configured to be moved substantially in the horizontal direction below the bell mouth (16) by a filter transfer mechanism (50) including a transfer belt (51) and rotating rollers (52, 53) as described later.

The indoor heat exchanger (14) is configured as a cross-fin type fin-and-tube heat exchanger. Though not particularly shown, the indoor heat exchanger (14) is in the shape of a rectangular frame when viewed in plan, and is arranged to surround the indoor fan (13) in the lateral direction. Therefore, the air blown in the lateral direction from the indoor fan (13) exchanges heat with the indoor heat exchanger (14), and then it is blown in every direction to the room through the outlets (12a, 12a, 12a, 12a) formed in the indoor panel (12).

The drain pan (15) receives drainage generated as a result -of condensation of moisture in the air on an outer surface of the indoor heat exchanger (14), and is arranged below the indoor heat exchanger (14). The drain pan (15) is provided with a drain pump (not shown) for discharging the drainage. The drain pan (15) is attached to the casing (11) in an inclined state so that the drainage is collected to part of the drain pan at which the drain pump is provided.

In the casing (11), an inlet passage (41) and an outlet passage (42) are formed as air passages. Specifically, the inlet passage (41) is provided on the inlet side of the indoor fan (13), i.e., it extends from the neighborhood of the center cover (17) to the inlet of the indoor fan (13) via the filter (21) and the bell mouth (16). The outlet passage (42) is provided on the outlet side of the indoor fan (13), i.e., it extends from the outlet of the indoor fan (13) to the outlets (12a, 12a, 12a, 12a) of the indoor panel (12) via the indoor heat exchanger (14)..

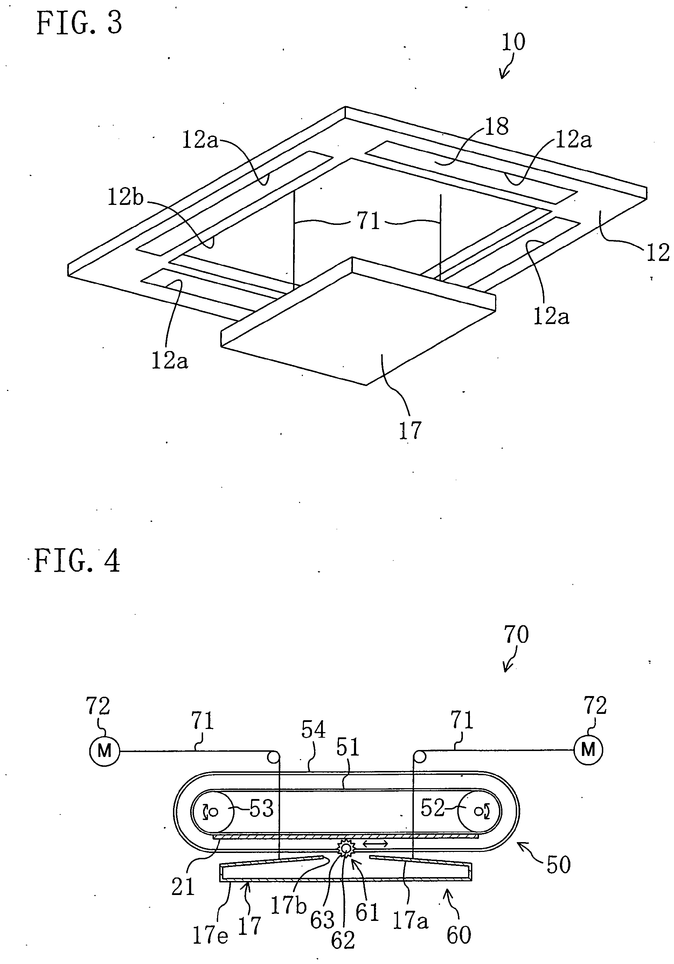

As shown in FIGS. 1 and 3, the indoor panel (12) is substantially square-shaped when viewed in plan, and includes a substantially square-shaped inlet (12b) formed in a center part thereof, and substantially rectangular-shaped four outlets (12a, 12a, 12a, 12a) formed outside the inlet (12b) to extend along four sides of the inlet (12b). As shown in FIGS. 2 and 3, when the indoor panel (12) is attached to the casing (11), the inlet (12b) is opened below the filter (21), and a center cover (17) which is substantially square-shaped and is smaller than the inlet (12b) is arranged in the center of the inlet when viewed in plan. Air is sucked through a gap formed by the inlet (12b) outside and the center cover (17).

The center cover (17) is a box-shaped member which is substantially square-shaped when viewed in plan, and is integrated with a cover portion (17e) on the room-facing side, and a container portion (17a) which forms space inside the cover. Specifically, a bottom surface of the container portion (17a) in the shape of a box is the cover portion (17e). The space formed by the container portion (17a) is provided to hold dust removed from the filter (21) as described later. The dust is held in the space through an opening (17b) formed in a center part of the center cover (17) to face upward. This structure eliminates the need to provide a separate container for holding the dust removed from the filter (21), and allows for the reduction in size of the indoor unit (10).

The opening (17b) is in the form of a slit substantially parallel to one of the sides of the center cover (17), and in which a rotating brush (61) of a dust removing mechanism (60) (a dust removing means) described later is arranged.

The center cover (17) (the container portion (17a)) has a top surface portion substantially in the shape of a pyramid. Specifically, the top surface of the center cover (17) (the container portion (17a)) has an upward inclination from the sides to the center part thereof when viewed in plan. Therefore, on the rear side of the center cover (17) constituting part of the inlet passage (41), the top surface of the center cover (17) (the container portion (17a)) functions as an air guide, thereby smoothly leading the air flow to the indoor fan (13).

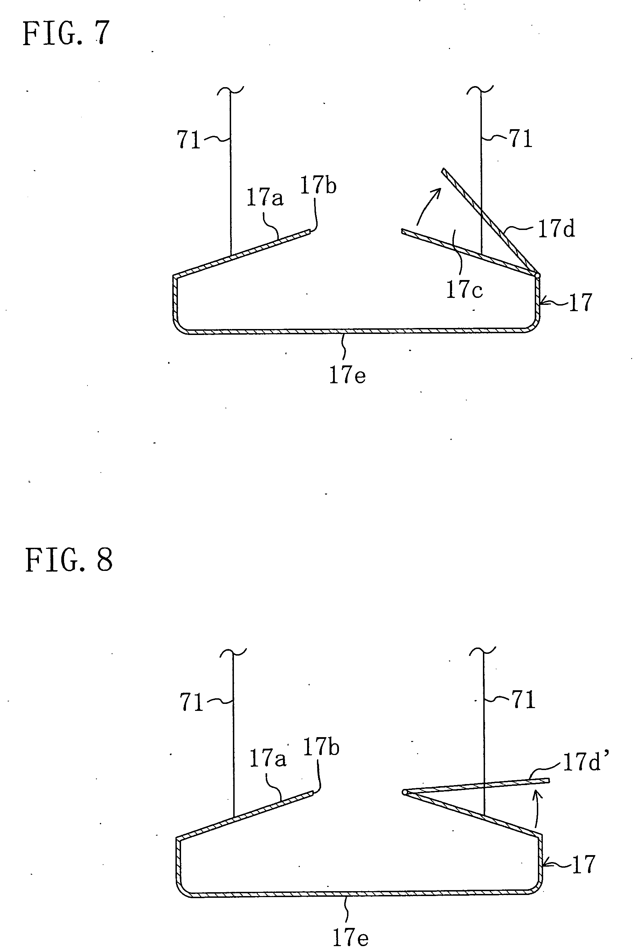

Further, as shown in FIGS. 5 and 7, a removal port (17c) (a removal port portion) through which the dust held in the space is collected is formed in the top surface of the center cover (17) (the container portion (17a)). A removal port cover (17d) is attached to the removal port (17c) so as to close the removal port (17c) at any time except for when the dust in the space is collected. The removal port cover (17d, 17d') may be configured so that a center side of the center cover (17) pivots upward as shown in FIG. 7, or it may be configured so that a peripheral side of the center cover (17) pivots upward as shown in FIG. 8.

An opening cover (18) is attached to each of the outlets (12a) of the indoor panel (12) to cover the corresponding outlet (12a). The opening cover (18) is rotatable in a lateral direction, and is controlled between a closed state shown in FIG. 1 and an opened state as shown in FIG. 2.

### -Dust Gathering Mechanism-

A dust gathering mechanism for removing the dust trapped on the filter (21) will be described below. The dust gathering mechanism includes, as shown in FIGS. 2, 4, and 5, a filter transfer mechanism (50) for transferring the filter (21), a dust removing mechanism (60) for removing the dust from the filter (21) and holding the dust, and a dust collecting mechanism (70) for collecting the held dust.

As shown in FIGS. 2, 4, and 5, the filter transfer mechanism (50) includes 2 rotating rollers (52, 53), on which a transfer belt (51) is running. One of the two rotating rollers (52, 53), i.e., a drive motor (52), is driven to rotate by a motor (not shown), thereby rotating the transfer belt (51). As shown in FIG. 5 only, a plurality of teeth (51a, 52a, 53a) are formed on outer circumferential surfaces of the rotating rollers (52, 53) and an inner circumferential surface of the transfer belt (51), respectively. With the teeth (52a, 53a) of the rotating rollers (52, 53) engaging with the teeth (51a) of the transfer belt (51), the transfer belt (51) rotates together with the rotating rollers (52, 53).

On an outer circumferential surface of the transfer belt (51), a plurality of projections (51b, 51b, ...), each of which is rectangular-shaped when viewed in plan, are arranged at regular intervals in the longitudinal direction of the belt. Further, as shown in FIG. 6, a plurality of engagement holes (23a, 23a, ...) are formed in a frame portion (23) of the filter (21) to correspond to the intervals of the projections (51b, 51b, ...). The engagement holes (23a, 23a, ...) of the filter (21) are rectangular-shaped, respectively, like the projections (51b, 51b, ...) of the transfer belt (51), and are sized to be able to engage with the projections (51b, 51b, ...). With the engagement between the engagement holes (23a, 23a, ...) of the filter (21) and the projections (51b, 51b, ...) of the transfer belt (51), the filter (21) is transferred together with the transfer belt (51).

As shown in FIG. 6, the filter (21) includes a filter portion (22) for trapping the dust in the air, and a frame portion (23) attached to the periphery of the filter portion (22) and is rectangular-shaped when viewed in plan. The filter portion (22) shown in FIG. 6 is formed flat. However, the invention is not limited thereto, and the filter portion (22) may be corrugated so as to increase an area for trapping the dust.

The filter transfer mechanism (50) includes an annular guide (54) arranged to cover the rear surface of the transfer belt (51). In transferring the filter (21) by the rotation of the transfer belt (51), the guide (54) leads the filter (21) to move along the transfer belt (51).

In the filter transfer mechanism (50), the rotating rollers (52, 53) are configured to be able to rotate clockwise and counterclockwise. When the air conditioner is operated, the filter (21) is located almost immediately below the inlet of the indoor fan (13) (at the position shown in FIG. 2). On the other hand, in removing the dust from the filter (21) by the dust removing mechanism (60), the filter (21) is moved right and left (in FIGS. 2 and 4) relative to the dust removing mechanism (60).

In the structure shown in FIG. 4, the rotating rollers (52, 53) are rotated so as to rotate the filter (21) and the transfer belt (21) in a single direction. However, the present invention is not limited thereto.

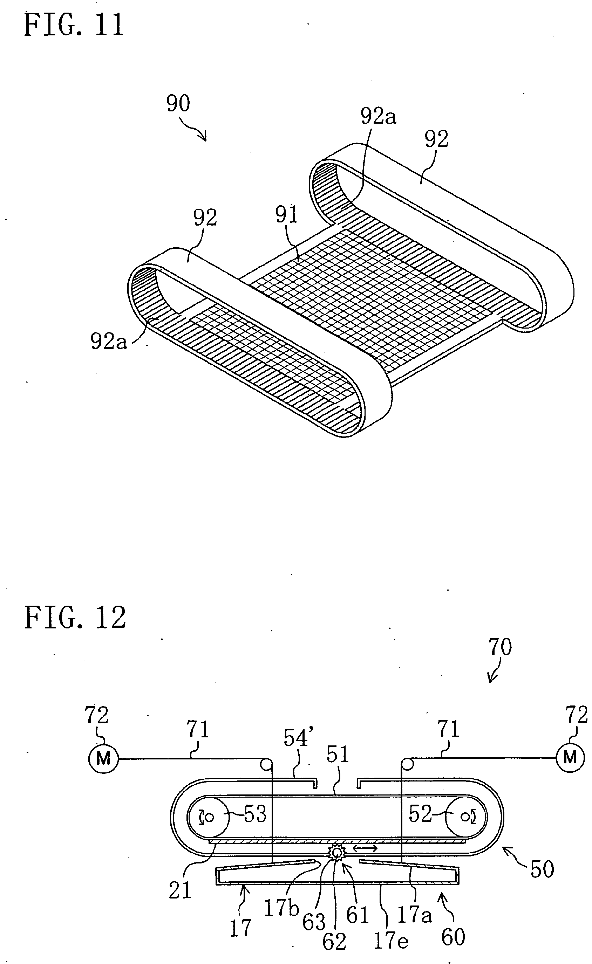

For example, in the structure shown in FIG. 12, the filter (21) may be moved in one direction so that the dust on the half of the filter (21) is removed, and then the filter (21) may be moved in the other direction to remove the rest of the dust on the other half of the filter (21). The filter (21) may alternately be moved right and left, while gradually increasing the stroke. In the structure shown in FIG. 12, the guide (54') is formed substantially in the shape of letter C, with an upper portion thereof partially cut off.

Thus, in removing the dust from the filter (21), the worker does not need to work at high elevations, and the dust can automatically be removed from the filter (21) without detaching the filter (21). Therefore, the filter can be recovered quickly and efficiently.

The dust removing mechanism (60) includes, as shown in FIGS. 2, 4, and 5, a rotating brush (61) for removing the dust trapped on the filter (21), and a container portion (17a) of the center cover (17) for holding the dust removed by the rotating brush (61).

The rotating brush (61) is made of a cylindrical member (62) and bristles (63) attached to the circumference of the cylindrical member (62). The cylindrical member (62) is rotatably supported by the casing (11). The rotating brush (61) is positioned so that the bristles (63) can touch the room-facing surface of the filter (21) to remove the dust trapped on the filter (21).

As described above, the center cover (17) is provided with the space for holding the dust removed from the filter (21). The dust removed from the filter (21) by the rotating brush (61) is held in the space through the slit-shaped opening (17b) formed in the center part of the center cover (17) when viewed in plan. Specifically, the rotating brush (61) is arranged in the slit-shaped opening (17b) formed in the container portion (17a) of the center cover (17), so that the dust removed from the filter (21) by the rotating brush (61) can efficiently be held in the space. Further, since the rotating brush (61) is arranged in the opening (17b), the dust held in the space is prevented from dispersing outside through the opening (17b).

The dust collecting mechanism (70) is configured to lift/lower the center cover (17) holding the dust therein. Specifically, the dust collecting mechanism (70) includes wires (71, 71) for hanging and supporting the center cover (17), and lifting/lowering motors (72, 72) for winding or unwinding the wires (71), respectively. One end of each of the wires (71, 71) is connected to the top surface of the center cover (17), and the other end of each of the wires (71, 71) is connected to the lifting/lowering motor (72, 72). The center cover (17) is lifted/lowered by winding or unwinding the wires (71, 71) by the lifting/lowering motors (72, 72).

In the top surface of the container portion (17a) of the center cover (17), which is lowered by the dust collecting mechanism (70), the removal port (17c) for collecting the dust therethrough is formed as described above. Therefore, the dust can easily be collected through the removal port (17c).

The wires (71, 71) have a length that makes it possible to lower the center cover (17) to a level at which the worker can collect the dust from the center cover (17) without stepping on a ladder, etc.

### -Dust Removing and Collecting Operation-

Operation of removing and collecting the dust trapped on the filter (21) of the indoor unit (10) configured as described above will be described below.

In normal operation of the indoor unit (10), the filter (21) is located almost immediately below the inlet of the indoor fan (13) as shown in FIG. 2. In this case, the filter (21) traps the dust contained in the air to be sucked by the indoor fan (13), so that the air containing less dust is sent to the indoor fan (13).

Upon detecting that a large amount of dust is trapped on the filter (21), the indoor unit (10) drives the filter transfer mechanism (50) to move the filter (21) in the horizontal direction (to the right in FIG. 2) by the rotation of the transfer belt (51). Since the rotating brush (61) of the dust removing mechanism (60) is in contact with the room-facing surface of the filter (21), the rotating brush (61) removes the dust adhered to the room-facing surface of the filter (21) as the filter (21) is moved by the filter transfer mechanism (50). When the filter (21) is moving in the horizontal direction by the effect of the transfer belt (51), a front end portion of the filter (21) travels along the transfer belt (51) due to the presence of the annular guide (54). This makes it possible to efficiently move the filter (21) relative to the rotating brush (61), even in small space. The large amount of dust trapped on the filter (21) can be detected by, for example, sensing a difference between pressure at the upstream and pressure at the downstream of the filter.

The dust removed by the rotating brush (61) falls in the space inside the box-shaped center cover (17) located below the rotating brush (61), and is held in the space. Since the rotating brush (61) is arranged in the opening (17a) of the center cover (17) (the container portion (17a)), the dust removed by the rotating brush (61) from the filter (21) is efficiently held in the center cover (17). Further, with the rotating brush (61) arranged in the opening (17b), the dust held in the center cover (17) is prevented from dispersing outside through the opening (17b).

When it is detected that the amount of the dust held in the center cover (17) reaches or exceeds a predetermined amount, the center cover (17) hung by the wires (71, 71) of the dust collecting mechanism (70) is lowered by the rotation of the lifting/lowering motor (72), while the center cover (17) is kept in a substantially horizontal state. After the center cover (17) is lowered to the level that the worker can reach, the removal port cover (17d) of the center cover (17) is opened to collect the dust through the removal port (17c). The amount of the dust held in the center cover (17) can be detected, for example, by measuring height or weight of the dust held in the center cover (17). The dust in the center cover (17) can be collected, for example, by discharging the dust by inclining the center cover (17), or by sucking the dust by a cleaner or the like.

After the dust is collected from the center cover (17), the center cover (17) is lifted by the dust collecting mechanism (70) to return to the original position (the position shown in FIG. 2).

In this manner, the lifting/lowering of the center cover (17) in the substantially horizontal state allows the worker to easily collect the dust without involving work at high elevations. Further, this structure can prevent the dispersion of the dust, which may be caused when the dust is moved or risen up due to impact applied to the center cover (17) or inclination of the center cover (17) in lifting/lowering the center cover (17).

### -Advantages of Embodiment-

According to the above-described embodiment, the dust trapped on the filter (21) arranged on the inlet side of the indoor fan (13) is removed by the rotating brush (61) of the dust removing mechanism (60), and the dust removed from the filter (21) is held in the space formed in the center cover (17) covering the room-facing side of the filter (21). This structure eliminates the need to provide a separate container for the dust removed from the filter (21), and allows for reduction in size of the indoor unit (10).

In removing the dust on the filter (21) by the dust removing mechanism (60), the filter (21) is moved in the horizontal direction by the filter transfer mechanism (50). Therefore, the dust can automatically be removed from the filter (21), and the worker does not need to detach the filter (21), or to directly clean the filter (21) in the attached state.

The center cover (17) is configured to be lifted/lowered by the dust collecting mechanism (70). Therefore, the worker can collect the dust from the center cover (17) without stepping on a ladder or the like to work at high elevations. Further, since the center cover (17) is lifted/lowered in the substantially horizontal state, the dust in the center cover (17) hardly moves. This structure makes it possible to suppress the dispersion of the dust in the center cover (17) to the surroundings, which may caused by impact of the lifting/lowering of the center cover (17).

The center cover (17) is a box-shaped member integrated with the cover portion (17e) on the room-facing side and the container portion (17a), and the rotating brush (61) of the dust removing mechanism (60) is arranged in the opening (17b) formed in the top surface of the center cover (17). Therefore, the dust removed by the rotating brush (61) from the filter (21) is not dispersed into the surroundings, and remains held in the space in the center cover (17). Specifically, the above-described structure makes it possible to efficiently hold the dust in the space, and to prevent the dust held in the space from dispersing into the surroundings.

The opening (17b) is in the shape of a slit extending substantially parallel to one of the sides of the center cover (17), and the rotating brush (61) made of the cylindrical member (62) having the bristles (63) attached to the circumference thereof is arranged in the opening (17b). This allows for the removal of the dust from a large area of the filter (21) at one time, thereby improving the efficiency in removing the dust.

The opening (17b) is formed in the center part of the center cover (17) when viewed in plan. Therefore, the opening (17b) is less affected by the flow of air traveling from the peripheral part of the center cover (17) to the indoor fan (13) on the rear side of the center cover (17) as compared with the case where the opening is formed in the peripheral part of the center cover (17). This structure can prevent the dispersion of the dust near the opening (17b).

Since the top surface of the center cover (17) has an upward inclination from the sides to the center part thereof, the top surface functions as a guide - for the above-described flow of air, and the space for holding the dust in the center cover (17) is increased as much as possible.

Further, since the removal port (17c) through which the dust held inside is removed is formed in the top surface of the center cover (17), the dust can easily be collected through the removal port (17c). The removal port (17c) has the removal port cover (17d) thereon, which can prevent the dispersion of the dust in the container portion (17a) through the removal port (17c).

### -Modified Example 1 of Embodiment-

The modified example 1 is different from the above-described embodiment in that the center cover (17) is lifted/lowered in an inclined state.

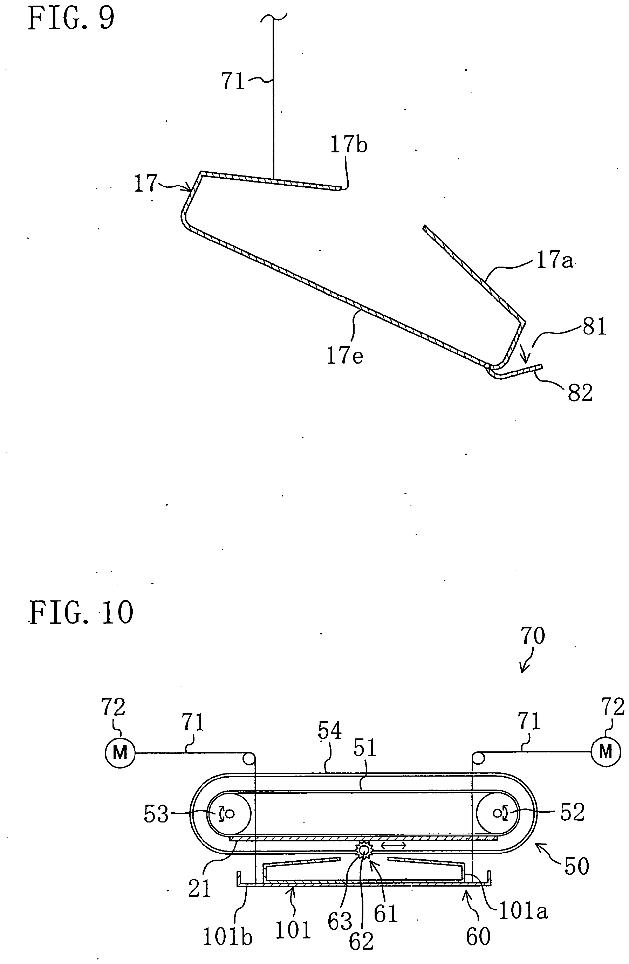

Specifically, as shown in FIG. 9, only one side of the center cover (17) is hung and supported by a wire (71), and a removal port (81) (a removal port portion) is formed in the lowest part of the center cover (17). In this modified example 1, the removal port (81) is formed in part of the center cover (17) at which most of the dust is gathered when the center cover (17) is hung in an inclined state. This allows for the easy collection of the dust through the removal port (81).

As shown in FIG. 9, the removal port (81) is formed in one of .the side surfaces of the center cover (17) (the container portion (17a)), and a removal port cover (82) is attached to cover the removal port (81). The removal port cover (82) can prevent the dust from falling out of the center cover (17) when the center cover (17) is lifted/lowered in the inclined state.

When the center cover (17) is located at the predetermined position in the indoor unit (10) for the normal operation (the position shown in FIG. 2), the center cover (17) preferably includes a support device for supporting part of the center cover (17) which is not hung and supported by the wire. The support device may support the center cover by mechanical engagement, or may fix the center cover (17) using an electromagnet.

Instead of hanging only one side of the center cover (17) by the wire (71) as shown in FIG. 9, both sides of the center cover (17) may be hung and supported by the wires (71, 71) as shown in FIG. 7, and the wires (71) may be wound or unwound by the lifting/lowering motors (72, 72) at different rates so that the lengths of the two wires (71, 71) vary.

### -Modified Example 2 of Embodiment-

The modified example 2 is different from the above-described embodiment in that a cover portion (101b) and a box-shaped container portion (101a) constituting a center cover (101) are detachable. Except for this feature, the modified example 2 is configured substantially in the same manner as the above-described embodiment. Therefore, the same components are indicated by the same characters to omit the description.

Specifically, as shown in FIG. 10, the center cover (101) includes a plate-like cover portion (101b) covering the room-facing side of the filter, and a box-shaped container portion (101a) arranged on the cover portion (101b). The container portion (101a) is detachable from the cover portion (101b).

The cover portion (101b) is a rectangular, plate-shaped member when viewed in plan, with a circumferential portion thereof bent upward. To the cover portion (101b), the other end of each of the wires (71) is connected, while one end of each of the wires (71) is connected to the lifting/lowering motor (72). The cover portion (101b) can be lifted/lowered with the container portion (101a) placed thereon.

The container portion (101a) is a box-shaped member which is rectangular, and is smaller than the cover portion (101b) when viewed in plan. Like the center cover (17) of the above-described embodiment, the container portion (101a) is provided with an opening formed in a top portion thereof, and a rotating brush (61) is arranged in the opening. The structure of the top portion of the container portion (101a) is the same as that of the center cover (17) of the above-described embodiment, and therefore, the detailed description is omitted.

Though not particularly shown, the container portion (101a) is placed on the cover portion (101b) in a detachable manner. Specifically, the container portion (101a) may be placed on the cover portion (101b) without being fixed thereto. For example, the container portion (101a) may be attached to the cover portion (101b) using a bracket, or may be fixed to the cover portion (101b) by engagement.

### [Other Embodiments]

The above-described embodiment may be modified as described below.

In the above-described embodiment, the center cover (17) is lifted/lowered by the dust collecting mechanism (70), but the present invention is not limited thereto. The center cover (17) may be configured to be detachable, so that the worker stepped on a ladder or the like can detach the center cover (17) to collect the dust. Further, the dust collecting mechanism may be modified as follows. Specifically, the center cover (17) may be configured to be pivotable downward about one of the peripheral sides, and the removal port may be-formed in the lowest part of the center cover (17) in the inclined state.

In the above-described embodiment, the slit-shaped opening (17b) is formed in the center part of the center cover (17), but the invention is not limited thereto. The opening may be formed in other part, or it may be in the other shape than the slit.

In the above-described embodiment, the dust is removed from the filter (21) by the rotating brush (61), but the invention is not limited thereto. For example, a suction device using a fan or the like may be provided to suck the dust.

In the above-described embodiment, the filter (21) is configured as a sheet-like member, but the invention is not limited thereto. As shown in FIG. 11, a filter portion (91) may be formed in part of a belt member (90). In FIG. 11, the belt member (90) includes the filter portion (91) in a center part thereof in the lateral direction, and belt portions (92, 92) at both ends in the lateral direction. A plurality of teeth (92a, 92a, ...) formed on an inner surface of each of the belt portions (92, 92) engage with a plurality of teeth (52a, 53a, ...) of the rotating rollers (52, 53) of the filter transfer mechanism (50). 20 Specifically, the belt member (90) is cut into the shape in which only the filter portion (91) remains in the lateral center part thereof. Therefore, when the belt member (90) is rotated by the filter transfer mechanism (50), the dust adheres only to the filter portion (91), because part of the belt member facing the filter portion (91) is cut off.

In the above-described embodiment, only the center cover (17) is lifted/lowered, 25 but the invention is not limited thereto. All or some of the dust removing mechanism (60), the filter transfer mechanism (50), and the filter (21) may be lifted/lowered together with the center cover (17).

### INDUSTRIAL APPLICABILITY

As described above, in the indoor unit of the air conditioner according to the present invention, the container portion for holding the dust removed from the filter is included in the cover for covering the room-facing side of the filter, thereby reducing the size of the indoor unit. Thus, the indoor unit of the present invention is useful for indoor units installed on a ceiling of room space.

## Claims

1. An indoor unit of an air conditioner comprising:
a casing (11) installed on a ceiling:
an indoor fan (13) accommodated in the casing (11);
an air filter (21) arranged on an inlet side of the indoor fan (13); and
a dust removing means (61) configured to remove dust trapped on the air filter (21),
a cover portion (17e) arranged to cover a room-facing side of the air filter (21); and
a box-shaped container portion (17a, 101a) which is provided on the cover portion (17c) and forms a space for holding the dust removed from the air filter (21) by the dust removing means (61),
**characterized in that**:
the cover portion (17e, 101b) is configured as a bottom surface of the box-shaped container portion (17a) or as a plate-shaped member to which the container portion (101a) is detachably attached.

2. The indoor unit of the air conditioner of claim 1, wherein
an opening (17b) is formed in a top surface of the container portion (17a), and
the dust removing means (61) is configured so that the dust is held in the container portion (17a) through the opening (17b).

3. The indoor unit of the air conditioner of claim 2, wherein
the dust removing means (61) is arranged in the opening (17b).

4. The indoor unit of the air conditioner of claim 2, wherein
the opening (17b) of the container portion (17a) is located in a center part of the cover portion (17e) when viewed in plan.

5. The indoor unit of the air conditioner of claim 2, wherein
the top surface of the container portion (17a) has an upward inclination from sides to the center part of the cover portion (17e).

6. The indoor unit of the air conditioner of claim 2, wherein
the container portion (17a) is provided with a removal port portion (17c) through which the dust held in the container portion (17a) is removed.

7. The indoor unit of the air conditioner of claim 1, further comprising:
a lifting/lowering means (70) configured to lift/lower the cover portion (17e).

8. The indoor unit of the air conditioner of claim 7, wherein
the lifting/lowering means (70) is configured to lift/lower the cover portion (17e) in a substantially horizontal state.

9. The indoor unit of the air conditioner of claim 7, wherein
the container portion (17a) is provided with a removal port portion (81) through which the dust held in the container portion (17a) is removed, and an openable removal port cover (82) for covering the removal port portion (81), and
the lifting/lowering means (70) is configured to lift/lower the cover portion (17e) in an inclined state so that the dust is gathered to the removal port portion (81).

## Patentansprüche

1. Innenraumeinheit einer Klimaanlage, umfassend:
ein Gehäuse (11), das an einer Decke installiert ist:
ein Innenraum-Gebläse (13), das in dem Gehäuse (11) aufgenommen ist;
einen Luftfilter (21), der an einer Einlassseite des Innenraum-Gebläses (13) angeordnet ist; und
ein Entstaubungsmittel (61), das konfiguriert ist, Staub zu entfernen, der sich an dem Luftfilter (21) abgesetzt hat,
einen Abdeckabschnitt (17e), der angeordnet ist, um eine dem Raum zugewandte Seite des Luftfilters (21) abzudecken; und
einen kastenförmigen Behälterabschnitt (17a, 101a), der an dem Abdeckabschnitt (17c) bereitgestellt ist und einen Raum zum Aufnehmen des durch das Entstaubungsmittel (61) von dem Luftfilter (21) entfernten Staubs bildet,
**dadurch gekennzeichnet, dass**:
der Abdeckabschnitt (17e, 101b) als eine untere Fläche des kastenförmigen Behälterabschnitts (17a) oder als ein plattenförmiges Element konfiguriert ist, an der/dem der Behälterabschnitt (101a) abnehmbar befestigt ist.

2. Innenraumeinheit der Klimaanlage nach Anspruch 1, wobei
eine Öffnung (17b) in einer oberen Fläche des Behälterabschnitts (17a) gebildet ist und
das Entstaubungsmittel (61) derart konfiguriert ist, dass der Staub in dem Behälterabschnitt (17a) durch die Öffnung (17b) hindurch aufgenommen ist.

3. Innenraumeinheit der Klimaanlage nach Anspruch 2, wobei das Entstaubungsmittel (61) in der Öffnung (17b) angeordnet ist.

4. Innenraumeinheit der Klimaanlage nach Anspruch 2, wobei
sich die Öffnung (17b) des Behälterabschnitts (17a), wenn von einer Draufsicht aus betrachtet, in einem Mittelteil des Abdeckabschnitts (17e) befindet.

5. Innenraumeinheit der Klimaanlage nach Anspruch 2, wobei
die obere Fläche des Behälterabschnitts (17a) eine von Seiten bis zu dem Mittelteil des Abdeckabschnitts (17e) nach oben gerichtete Neigung aufweist.

6. Innenraumeinheit der Klimaanlage nach Anspruch 2, wobei
der Behälterabschnitt (17a) mit einem Entfernungsanschlussabschnitt (17c) bereitgestellt ist, durch den der in dem Behälterabschnitt (17a) aufgenommene Staub entfernt wird.

7. Innenraumeinheit der Klimaanlage nach Anspruch 1, weiter umfassend:
ein Anhebe-/Absenkmittel (70), das konfiguriert ist, den Abdeckabschnitt (17e) anzuheben/abzusenken.

8. Innenraumeinheit der Klimaanlage nach Anspruch 7, wobei
das Anhebe-/Absenkmittel (70) konfiguriert ist, den Abdeckabschnitt (17e) in einem im Wesentlichen horizontalen Zustand anzuheben/abzusenken.

9. Innenraumeinheit der Klimaanlage nach Anspruch 7, wobei
der Behälterabschnitt (17a) mit einem Entfernungsanschlussabschnitt (81), durch den der in dem Behälterabschnitt (17a) aufgenommene Staub entfernt wird, und einer zu öffnenden Entfernungsanschlussabdeckung (82) zum Abdecken des Entfernungsanschlussabschnitts (81) bereitgestellt ist, und
das Anhebe-/Absenkmittel (70) konfiguriert ist, den Abdeckabschnitt (17e) in einem geneigten Zustand anzuheben/abzusenken, sodass der Staub in dem Entfernungsanschlussabschnitt (81) gesammelt wird.

## Revendications

1. Unité intérieure d'un climatiseur comprenant :
un boîtier (11) installé sur un plafond ;
un ventilateur intérieur (13) logé dans le boîtier (11) ;
un filtre à air (21) agencé sur un côté d'entrée du ventilateur intérieur (13) ; et
un moyen d'élimination de poussière (61) configuré pour éliminer de la poussière prise au piège sur le filtre à air (21),
une portion de couverture (17e) agencée pour couvrir un côté faisant face au côté du filtre à air (21) ; et
une portion formant récipient en forme de boîte (17a, 101a) qui est prévue sur la portion de couverture (17c) et qui forme un espace pour maintenir la poussière éliminée du filtre à air (21) par le moyen d'élimination de poussière (61),
**caractérisée en ce que** :
la portion de couverture (17e, 101b) est configurée comme une surface inférieure de la portion formant récipient en forme de boîte (17a) ou comme un élément de forme plate auquel la portion formant récipient (101a) est attachée de façon amovible.

2. Unité intérieure du climatiseur selon la revendication 1, dans laquelle
une ouverture (17b) est formée dans une surface supérieure de la portion formant récipient (17a), et
le moyen d'élimination de poussière (61) est configuré de sorte que la poussière est maintenue dans la portion formant récipient (17a) à travers l'ouverture (17b).

3. Unité intérieure du climatiseur selon la revendication 2, dans laquelle
le moyen d'élimination de poussière (61) est agencé dans l'ouverture (17b).

4. Unité intérieure du climatiseur selon la revendication 2, dans laquelle
l'ouverture (17b) de la portion formant récipient (17a) est située dans une partie centrale de la portion de couverture (17e) lorsque vue dans le plan.

5. Unité intérieure du climatiseur selon la revendication 2, dans laquelle
la surface supérieure de la portion formant récipient (17a) présente une inclinaison ascendante à partir des côtés vers la partie centrale de la portion de couverture (17e).

6. Unité intérieure du climatiseur selon la revendication 2, dans laquelle
la portion formant récipient (17a) est munie d'une portion formant orifice d'élimination (17c) à travers laquelle la poussière contenue dans la portion formant récipient (17a) est éliminée.

7. Unité intérieure du climatiseur selon la revendication 1, comprenant en outre :
un moyen de levage/abaissement (70) configuré pour lever/abaisser la portion de couverture (17e).

8. Unité intérieure du climatiseur selon la revendication 7, dans laquelle
le moyen de levage/abaissement (70) est configuré pour lever/abaisser la portion de couverture (17e) dans un état sensiblement horizontal.

9. Unité intérieure du climatiseur selon la revendication 7, dans laquelle
la portion formant récipient (17a) est munie d'une portion formant orifice d'élimination (81) à travers laquelle la poussière maintenue dans la portion formant récipient (17a) est éliminée, et un couvercle d'orifice d'élimination pouvant être ouvert (82) pour couvrir la portion formant orifice d'élimination (81), et
le moyen de levage/abaissement (70) est configuré pour lever/abaisser la portion de couverture (17e) dans un état incliné de sorte que la poussière est regroupée vers la portion formant orifice d'élimination (81).
